# EUROPEAN PATENT APPLICATION

(11) **EP 4 431 581 A1**
(43) Date of publication of application: **18.09.2024**
(21) Application number: 21949520.7
(22) Date of filing: 12.11.2021
(51) Int. Cl.: C09K 3/00

(54) **CONTACT LENS AND FABRICATION METHOD THEREFOR**

(71) Applicant: Pegavision Corporation, Taoyuan, Taiwan (TW)
(72) Inventor: LI, Ting-Yu, Taoyuan Taiwan (TW); CHANG, Han-Yi, Taoyuan Taiwan (TW)
(74) Representative: Winter, Brandl - Partnerschaft mbB
(86) International application number: PCT/CN2021/130235
(87) International publication number: WO 2023/082165

(57) **Abstract**

A contact lens and its manufacturing method are provided. The contact lens includes a lens and a hydrophilic coating that is attached to a surface of the lens by hydrogen bonding, ionic bonding, or a combination thereof. The hydrophilic coating includes polyacrylic acid and carbohydrate. Another contact lens includes a lens, a first hydrophilic coating, and a second hydrophilic coating. The first hydrophilic coating is attached to a surface of the lens by hydrogen bonding, ionic bonding, or a combination thereof and includes polyacrylic acid. The second hydrophilic coating is disposed on the first hydrophilic coating. The second hydrophilic coating includes polyvinylpyrrolidone, poloxamine, poloxamer, methylcellulose, hydroxypropyl methylcellulose, carboxymethyl cellulose, ascorbic acid, poly(2-methacryloyloxyethyl phosphorylcholine), hyaluronic acid, alginic acid, polyglutamic acid, carbohydrate, or combinations thereof. The carbohydrate includes monosaccharide, disaccharide, or a combination thereof. The contact lenses have high hydrophilicity and high stability, and the hydrophilic coatings have good adhesion.

## Description

### BACKGROUND

### Field of Invention

The present disclosure relates to contact lenses and manufacturing methods thereof. More particularly, the present disclosure relates to contact lenses having hydrophilic coatings and manufacturing methods thereof.

### Description of Related Art

Since silicone hydrogel contact lenses have high oxygen permeability, oxygen is allowed to reach the cornea through the lenses, which can relieve dry eyes and red eyes. Silicone hydrogel material has become the mainstream of the contact lens market in recent years; however, silicone hydrogel contact lenses have some disadvantages. For example, the hydrophobicity of the organic silicon based material may cause discomfort and dryness due to abrasion between the lens and the eye, and the surface of the lens is prone to protein adsorption and deposition.

To retain the advantages of the high oxygen permeability of the silicone hydrogel contact lenses, surface modification techniques of lenses can be used to enhance wearing comfort. However, some of the materials used for lens surface modification are toxic chemicals, such as carbon tetrachloride and chloroform, which have the potential to cause cancer. In addition, some surface modification techniques involve the addition of reactive functional groups to the materials used to form contact lenses. After the lenses have been molded, the lenses are polymerized with hydrophilic monomers or reacted with hydrophilic polymeric materials to undergo thermal cross-linking. However, these processes involve "covalent bond formation," which may affect the lens properties. Given the above, a new contact lens and a new manufacturing method of contact lens are needed to overcome the above problems.

### SUMMARY

The present disclosure provides a contact lens including a lens and a hydrophilic coating. The hydrophilic coating is attached to a surface of the lens by hydrogen bonding, ionic bonding, or a combination thereof, in which the hydrophilic coating includes polyacrylic acid (PAA) and carbohydrate, and the carbohydrate includes monosaccharide, disaccharide, or a combination thereof.

In some embodiments, the carbohydrate includes glyceraldehyde, dihydroxyacetone, erythrose, ribose, deoxyribose, arabinose, xylose, lyxose, idose, glucose, fructose, galactose, mannose, rhamnose, sedoheptulose, mannoheptulose, sucrose, trehalose, lactose, maltose, or combinations thereof.

In some embodiments, a weight ratio of the polyacrylic acid to the carbohydrate is ranged from about 1:0.01 to about 1:10.

The present disclosure provides a contact lens including a lens, a first hydrophilic coating, and a second hydrophilic coating. The first hydrophilic coating is attached to a surface of the lens by hydrogen bonding, ionic bonding, or a combination thereof, in which the first hydrophilic coating includes polyacrylic acid. The second hydrophilic coating is disposed on the first hydrophilic coating. The first hydrophilic coating is disposed between the lens and the second hydrophilic coating. The second hydrophilic coating includes polyvinylpyrrolidone (PVP), poloxamine, poloxamer, methylcellulose (MC), hydroxypropyl methylcellulose (HPMC), carboxymethyl cellulose (CMC), ascorbic acid, poly(2-methacryloyloxyethyl phosphorylcholine) (PMPC), hyaluronic acid (HA), alginic acid, polyglutamic acid (γ-PGA), carbohydrate, or combinations thereof. The carbohydrate includes monosaccharide, disaccharide, or a combination thereof.

In some embodiments, the carbohydrate includes glyceraldehyde, dihydroxyacetone, erythrose, ribose, deoxyribose, arabinose, xylose, lyxose, idose, glucose, fructose, galactose, mannose, rhamnose, sedoheptulose, mannoheptulose, sucrose, trehalose, lactose, maltose, or combinations thereof.

In some embodiments, the second hydrophilic coating includes the polyvinylpyrrolidone and the carbohydrate, and a weight ratio of the polyvinylpyrrolidone to the carbohydrate is ranged from about 1:0.01 to about 1:10.

In some embodiments, the lens in any one of the previous embodiments is selected from the group consisting of a rigid gas permeable lens, a hydrogel lens, and a silicone hydrogel lens.

The present disclosure provides a manufacturing method of a contact lens including soaking a lens in an acidic solution to form a hydrophilic coating on a surface of the lens. The acidic solution includes polyacrylic acid, carbohydrate, and a polar solvent, and the carbohydrate includes monosaccharide, disaccharide, or a combination thereof.

In some embodiments, soaking the lens in the acidic solution is performed at a temperature of about 20 °C to about 90 °C.

In some embodiments, a weight percentage of the polyacrylic acid in the acidic solution is from about 0.05% to about 5%.

In some embodiments, a weight percentage of the carbohydrate in the acidic solution is from about 0.05% to about 10%.

In some embodiments, the carbohydrate includes glyceraldehyde, dihydroxyacetone, erythrose, ribose, deoxyribose, arabinose, xylose, lyxose, idose, glucose, fructose, galactose, mannose, rhamnose, sedoheptulose, mannoheptulose, sucrose, trehalose, lactose, maltose, or combinations thereof.

In some embodiments, the acidic solution has a pH of about 1 to about 6.9.

In some embodiments, the polar solvent includes water, alcohol, or a combination thereof.

In some embodiments, the polar solvent includes the water and the alcohol, and soaking the lens in the acidic solution is performed at a temperature of about 20 °C to about 90 °C.

The present disclosure provides a manufacturing method of a contact lens including the following operations. (a) A lens is soaked in an acidic solution to form a first hydrophilic coating on a surface of the lens, in which the acidic solution includes polyacrylic acid and a first polar solvent. (b) The lens having the first hydrophilic coating is soaked in a hydrophilic solution to form a second hydrophilic coating on the first hydrophilic coating, in which the hydrophilic solution includes polyvinylpyrrolidone, poloxamine, poloxamer, methylcellulose, hydroxypropyl methylcellulose, carboxymethyl cellulose, ascorbic acid, poly(2-methacryloyloxyethyl phosphorylcholine), hyaluronic acid, alginic acid, polyglutamic acid, carbohydrate, or combinations thereof, and a second polar solvent. The carbohydrate includes monosaccharide, disaccharide, or a combination thereof.

In some embodiments, the hydrophilic solution includes the polyvinylpyrrolidone, and a weight percentage of the polyvinylpyrrolidone is ranged from about 0.05 % to about 10 %.

In some embodiments, the hydrophilic solution includes the carbohydrate, and a weight percentage of the carbohydrate in the acidic solution is from about 0.05% to about 10%.

In some embodiments, the hydrophilic solution has a pH of about 1 to about 14.

In some embodiments, soaking the lens having the first hydrophilic coating in the hydrophilic solution is performed at a temperature of about 20 °C to about 90 °C.

In some embodiments, the carbohydrate includes glyceraldehyde, dihydroxyacetone, erythrose, ribose, deoxyribose, arabinose, xylose, lyxose, idose, glucose, fructose, galactose, mannose, rhamnose, sedoheptulose, mannoheptulose, sucrose, trehalose, lactose, maltose, or combinations thereof.

These and other features, aspects, and advantages of the present disclosure will become better understood with reference to the following description and appended claims.

### DETAILED DESCRIPTION

In the present specification, a range represented by "a numerical value to another numerical value" is a schematic representation for avoiding listing all of the numerical values in the range in the specification. Therefore, the recitation of a specific numerical range covers any numerical value in the numerical range and a smaller numerical range defined by any numerical value in the numerical range, as is the case with the any numerical value and the smaller numerical range stated explicitly in the specification.

The term "about," "approximately," "essentially," or "substantially" as used herein is inclusive of the stated value and means within an acceptable range of deviation for the particular value as determined by persons of ordinary skill in the art, considering the measurement in question and the error associated with measurement of the particular quantity (i.e., the limitations of the measurement system). For example, "about" may mean within one or more standard deviations, or within, for example, ±30%, ±20%, ±15%, ±10%, ±5% of the stated value. Moreover, a relatively acceptable range of deviation or standard deviation may be chosen for the term "about," "approximately," "essentially" or "substantially" as used herein based on measuring properties, coating properties, or other properties, instead of applying one standard deviation across all the properties.

Although a series of operations or steps are used below to describe the method disclosed herein, an order of these operations or steps should not be construed as a limitation to the present disclosure. For example, some operations or steps may be performed in a different order and/or other steps may be performed at the same time. In addition, all shown operations, steps and/or features are not required to be executed to implement an embodiment of the present disclosure. In addition, each operation or step described herein may include a plurality of sub-steps or actions.

In order to solve the problems of the prior art, the present disclosure provides the following two contact lenses and methods of manufacturing the same. One or more hydrophilic coatings are formed on surfaces of the contact lenses. The one or more hydrophilic coatings are attached to the surfaces of the lenses by hydrogen bonding, ionic bonding, or a combination thereof. In other words, the hydrophilic coatings of the present disclosure are "not" attached to the lens surfaces by forming covalent bonding. Accordingly, the present disclosure can modify the lens surfaces without changing the structure of the lenses and without affecting the properties of the lenses. In other words, the manufacturing method of the present disclosure can maintain the original properties of the lenses and improve the hydrophilicity and wettability through the hydrophilic coatings, so that the contact lenses have a smaller hysteresis angle. In addition, the contact lenses of the present disclosure still have a small hysteresis angle after repeated autoclaving, which means that the hydrophilic coatings have excellent stability and can be firmly attached to the surfaces of the lenses. Furthermore, the manufacturing method of the present disclosure can form hydrophilic coatings with good adhesion on the lens surfaces in a short period of time, which can improve the production efficiencies of the contact lenses.

### (1) Contact lens with single hydrophilic coating and manufacturing method thereof

The present disclosure provides a manufacturing method of a contact lens including soaking a lens in an acidic solution to form a hydrophilic coating on a surface of the lens. The acidic solution includes polyacrylic acid, carbohydrate, and a polar solvent. The carbohydrate includes monosaccharide, disaccharide, or a combination thereof.

A contact lens can be produced by the above manufacturing method of the contact lens. The present disclosure provides a contact lens including a lens and a hydrophilic coating. The hydrophilic coating is attached to a surface of the lens by hydrogen bonding, ionic bonding, or a combination thereof, in which the hydrophilic coating includes polyacrylic acid and carbohydrate, and the carbohydrate includes monosaccharide, disaccharide, or a combination thereof. In some embodiments, the hydrophilic coating includes a mixture of the polyacrylic acid and the carbohydrate, and each of which is attached to the surface of the lens by hydrogen bonding, ionic bonding, or a combination thereof.

In some embodiments, the contact lens has a hysteresis angle of less than or equal to 55 degrees. For example, the hysteresis angle is less than or equal to 25 degrees. For example, the hysteresis angle is 1, 2, 3, 4, 5, 6, 7, 8, 9, 10, 15, 20, 25, 30, 40, 50, or 55. It can be known that the contact lens of the present disclosure has excellent hydrophilic property.

The acidic solution includes polyacrylic acid, carbohydrate, and a polar solvent. In some embodiments, soaking the lens in the acidic solution is performed at a temperature of about 20 °C to about 90 °C. For example, the temperature is 20, 30, 40, 50, 60, 70, 80, or 90 °C. The acidic solution of the present disclosure containing the specific components (polyacrylic acid and carbohydrate) can be used at room temperature or at lower temperatures (e.g., 20° C to 50° C) to form a hydrophilic coating with good hydrophilicity on the surface of the lens soaked in the solution. The manufacturing process is simple and can be integrated into existing manufacturing processes of contact lens. In some embodiments, the polar solvent includes water, alcohol, or a combination thereof. In some embodiments, the polar solvent includes the water and the alcohol, and soaking the lens in the acidic solution is performed at a temperature of about 20 °C to about 90 °C. For example, the temperature is 20, 30, 40, 50, 60, 70, 80, or 90 °C. For example, the alcohol includes alcohol with carbon numbers from 1 to 5, such as methanol, ethanol, ethylene glycol, propanol, propylene glycol, glycerol, butanol, butylene glycol, butanetriol, erythritol, pentanol, pentanediol, pentanetriol, pentanetetrol, pentapentanol, and all isomers of the above-mentioned alcohols. The present disclosure can enhance the quality of the hydrophilic coating formed on the surface of the lens by adding alcohols to the acidic solution to form the hydrophilic coating with high hydrophilicity.

In some embodiments, a weight percentage of the polyacrylic acid in the acidic solution is from about 0.05% to about 5%. For example, the weight percentage is 0.05, 0.1, 0.5, 1, 2, 3, 4, or 5%. In some embodiments, a weight percentage of the carbohydrate in the acidic solution is from about 0.05% to about 10%. For example, the weight percentage is 0.05, 0.1, 0.5, 1, 2, 3, 4, 5, 6, 7, 8, 9, or 10%. When the weight percentages of the polyacrylic acid and the carbohydrate fall within the above ranges, the hydrophilic coating with good adhesion and excellent hydrophilicity can be formed on the lens surface.

In some embodiments, a viscosity average molecular weight (Mv) of the polyacrylic acid is from about 10,000 Dalton (Da) to about 5,000,000 Da. For example, the Mv is 10,000, 100,000, 300,000, 400,000, 1,000,000, 2,000,000, 3,000,000, 4,000,000, or 5,000,000 Da.

In some embodiments, the lens is soaked in the acidic solution for a period of time ranging from about 10 to 180 minutes. For example, the soak period is 10, 15, 20, 25, 30, 35, 40, 45, 50, 55, 60, 70, 80, 90, 100, 120, 140, 160, or 180 minutes. The manufacturing method of the present disclosure can form the hydrophilic coating with good adhesion on the surface of the lens in a short period of time and can improve the production efficiency of the contact lens.

In some embodiments, the carbohydrate includes glyceraldehyde, dihydroxyacetone, erythrose, ribose, deoxyribose, arabinose, xylose, lyxose, idose, glucose, fructose, galactose, mannose, rhamnose, sedoheptulose, mannoheptulose, sucrose, trehalose, lactose, maltose, or combinations thereof.

In some embodiments, the acidic solution has a pH of about 1 to about 6.9. For example, the pH is 1, 2, 3, 4, 5, 6, 6.5, or 6.9. The acidic environment can promote the formation of hydrogen bonding, ionic bonding, or a combination thereof between the lens and the hydrophilic coating, thereby enhancing the adhesion of the hydrophilic coating.

In some embodiments, a weight ratio of the polyacrylic acid to the carbohydrate is ranged from about 1:0.01 to about 1:10. For example, the weight ratio is 1:0.01, 1:0.1, 1:0.5, 1:1, 1:2, 1:3, 1:4, 1:5, 1:6, 1:7, 1:8, 1:9, or 1:10. When the weight ratio falls within the above range, the hydrophilic coating with good adhesion and excellent hydrophilicity can be formed on the surface of the lens.

In some embodiments, the lens is selected from the group consisting of a rigid gas permeable lens, a hydrogel lens, and a silicone hydrogel lens. In some embodiments, the silicone hydrogel lens is produced by at least one silicone monomer (e.g., 3-[tris(trimethylsiloxy)silyl]propyl methacrylate (TRIS), 3-methacryloxy-2-hydroxypropoxy)propylbis(trimethylsiloxy)methylsilane (SiGMA)), at least one silicone polymer monomer (e.g., monomeric segments of polydimethylsiloxane (PDMS) modified by allyl or methyl propenyl), at least one monomeric material, or combinations thereof. The at least one monomeric material includes 2-hydroxyethyl methacrylate, glycidyl methacylate, 2-hydroxybutyl methacrylate, polyethylene glycol) dimethacrylate , acrylic acid, methacrylic acid, maleic acid, fumaric acid, 2-acrylamide-2-methylpropanesulfonic acid, 2-aminoethyl methacrylate hydrochloride, N-(3-aminopropyl)methacrylamide hydrochloride, or combinations thereof.

In some embodiments, the contact lens includes only a single-layer hydrophilic coating; in other words, the surface of the hydrophilic coating is not covered by other hydrophilic coating. In other embodiments, the manufacturing method may further include forming other hydrophilic coating on the hydrophilic coating. The number of the hydrophilic coating may be adjusted according to design requirements, such as one, two, or three layers, but is not limited thereto.

### (2) Contact lens with two hydrophilic coatings and manufacturing method thereof

The present disclosure provides a manufacturing method of a contact lens including the following operations. (a) A lens is soaked in an acidic solution to form a first hydrophilic coating on a surface of the lens, in which the acidic solution includes polyacrylic acid and a first polar solvent. (b) The lens having the first hydrophilic coating is soaked in a hydrophilic solution to form a second hydrophilic coating on the first hydrophilic coating, in which the hydrophilic solution includes polyvinylpyrrolidone (PVP), poloxamine, poloxamer, methylcellulose (MC), hydroxypropyl methylcellulose (HPMC), carboxymethyl cellulose (CMC), ascorbic acid, poly(2-methacryloyloxyethyl phosphorylcholine) (PMPC), hyaluronic acid (HA), alginic acid, polyglutamic acid (γ-PGA), carbohydrate, or combinations thereof, and a second polar solvent. The ascorbic acid may also be referred to as vitamin C. The carbohydrate includes monosaccharide, disaccharide, or a combination thereof.

A contact lens can be produced by the above manufacturing method of the contact lens. The present disclosure provides a contact lens including a lens, a first hydrophilic coating, and a second hydrophilic coating. The first hydrophilic coating is attached to a surface of the lens by hydrogen bonding, ionic bonding, or a combination thereof, in which the first hydrophilic coating includes polyacrylic acid. The second hydrophilic coating is disposed on the first hydrophilic coating. The first hydrophilic coating is disposed between the lens and the second hydrophilic coating. The second hydrophilic coating includes polyvinylpyrrolidone, poloxamine, poloxamer, methylcellulose, hydroxypropyl methylcellulose, carboxymethyl cellulose, ascorbic acid, poly(2-methacryloyloxyethyl phosphorylcholine), hyaluronic acid, alginic acid, polyglutamic acid, carbohydrate, or combinations thereof. The carbohydrate includes monosaccharide, disaccharide, or a combination thereof.

In some embodiments, the contact lens has a hysteresis angle of less than or equal to 10 degrees. For example, the hysteresis angle is 1, 2, 3, 4, 5, 6, 7, 8, 9, or 10. It can be known that the contact lens of the present disclosure has excellent hydrophilic property.

In some embodiments, the second hydrophilic coating is attached to the first hydrophilic coating by hydrogen bonding, ionic bonding, or a combination thereof. Since the second hydrophilic coating is "not" attached to the first hydrophilic coating by forming covalent bonding with the first hydrophilic coating. Thus, the second hydrophilic coating can be attached to the first hydrophilic coating without changing and affecting the property of the first hydrophilic coating.

In some embodiments, a weight percentage of the polyacrylic acid in the acidic solution is from about 0.05% to about 5%. For example, the weight percentage is 0.05, 0.1, 0.5, 1, 2, 3, 4, or 5%. In some embodiments, the hydrophilic solution includes the polyvinylpyrrolidone, and a weight percentage of the polyvinylpyrrolidone is from about 0.05% to about 10%. For example, the weight percentage is 0.05, 0.1, 0.5, 1, 2, 3, 4, 5, 6, 7, 8, 9, or 10%. In some embodiments, the hydrophilic solution includes the carbohydrate, and a weight percentage of the carbohydrate is from about 0.05% to about 10%. For example, the weight percentage is 0.05, 0.1, 0.5, 1, 2, 3, 4, 5, 6, 7, 8, 9, or 10%. When the weight percentages of the polyacrylic acid, the polyvinylpyrrolidone, and the carbohydrate fall within the above ranges, the hydrophilic coatings with good adhesion and excellent hydrophilicity can be formed on the lens surface.

In some embodiments, the acidic solution has a pH of about 1 to about 6.9. For example, the pH is 1, 2, 3, 4, 5, 6, 6.5, or 6.9. The acidic environment can promote the formation of hydrogen bonding, ionic bonding, or a combination thereof between the lens and the first hydrophilic coating, thereby enhancing the adhesion of the first hydrophilic coating. In some embodiments, the hydrophilic solution has a pH of from about 1 to about 14. For example, the pH is 1, 2, 3, 4, 5, 6, 6.5, 6.9, 7, 7.1, 7.5, 8, 9, 10, 11, 12, 13, or 14. The material of the hydrophilic solution can adhere to the first hydrophilic coating due to its physical properties to form the second hydrophilic coating with good surface properties. Therefore, there is no need to additionally adjust the pH of the aqueous hydrophilic solution to fall within a specific value range. In some embodiments, the pH is from about 1 to about 6.9, and the acidic environment can promote the formation of hydrogen bonding, ionic bonding, or a combination thereof between the first hydrophilic coating and the second hydrophilic coating, thereby enhancing the adhesion of the second hydrophilic coating. In other embodiments, the pH is from about 7.1 to about 14, and the present disclosure can form the second hydrophilic coating in an alkaline environment.

In some embodiments, soaking the lens in the acidic solution is performed at a temperature of about 20 °C to about 90 °C. For example, the temperature is 20, 30, 40, 50, 60, 70, 80, or 90 °C. In some embodiments, soaking the lens having the first hydrophilic coating in the hydrophilic solution is performed at a temperature of about 20 °C to about 90 °C. For example, the temperature is 20, 30, 40, 50, 60, 70, 80, or 90 °C. The present disclosure can form the hydrophilic coating with good hydrophilicity on the surface of the lens soaked in the solution at lower temperature (e.g., 40°C to 70°C). The manufacturing process is simple and can be integrated into existing manufacturing processes of contact lens.

In some embodiments, the lens is soaked in the acidic solution for a period of time ranging from about 10 to 180 minutes. For example, the soak period is 10, 15, 20, 25, 30, 35, 40, 45, 50, 55, 60, 70, 80, 90, 100, 120, 140, 160, or 180 minutes. In some embodiments, the lens having the first hydrophilic coating is soaked in the hydrophilic solution for a period of time ranging from about 10 to 180 minutes. For example, the soak period is 10, 15, 20, 25, 30, 35, 40, 45, 50, 55, 60, 70, 80, 90, 100, 120, 140, 160, or 180 minutes. The manufacturing method of the present disclosure can form the hydrophilic coatings with good adhesion on the surface of the lens in a short period of time and can improve the production efficiency of the contact lens.

In some embodiments, the polyacrylic acid has a weight average molecular weight (Mw), a viscosity average molecular weight (Mv), and/or a number average molecular weight (Mn). The Mw, Mv, or Mn of the polyacrylic acid is about 10,000 to about 5,000,000 Da, such as 10,000, 100,000, 300,000, 400,000, 1,000,000, 2,000,000, 3,000,000, or 5,000,000 Da. In some embodiments, the polyvinylpyrrolidone has a weight average molecular weight (Mw), a viscosity average molecular weight (Mv), and/or a number average molecular weight (Mn). The Mw, Mv, or Mn of the polyvinylpyrrolidone is about 10,000 to about 5,000,000 Da, such as 10,000, 100,000, 300,000, 400,000, 1,000,000, 2,000,000, 3, 000,000, 4,000,000, or 5,000,000 Da.

In some embodiments, the carbohydrate includes glyceraldehyde, dihydroxyacetone, erythrose, ribose, deoxyribose, arabinose, xylose, lyxose, idose, glucose, fructose, galactose, mannose, rhamnose, sedoheptulose, mannoheptulose, sucrose, trehalose, lactose, maltose, or combinations thereof.

In some embodiments, the second hydrophilic coating includes the polyvinylpyrrolidone and the carbohydrate, and a weight ratio of the polyvinylpyrrolidone to the carbohydrate is ranged from about 1:0.01 to about 1:10. For example, the weight ratio is 1:0.01, 1:0.1, 1:0.5, 1:1, 1:2, 1:3, 1:4, 1:5, 1:6, 1:7, 1:8, 1:9, or 1.10. When a weight ratio falls within the above ranges, the hydrophilic coating with good adhesion and excellent hydrophilicity can be formed on the surface of the lens. In other embodiments, the second hydrophilic coating includes only the polyvinylpyrrolidone and does not include carbohydrate, such as trehalose. In other embodiments, the second hydrophilic coating includes only the carbohydrate, such as trehalose, and does not include polyvinylpyrrolidone.

In some embodiments, the lens in any one of the previous embodiments is selected from the group consisting of a rigid gas permeable lens, a hydrogel lens, and a silicone hydrogel lens. The embodiment of the silicone hydrogel lens can refer to the previous embodiments, and will not be repeated here.

In other embodiments, the manufacturing method may further include forming other hydrophilic coating on the second hydrophilic coating. The number of the hydrophilic coating may be adjusted according to design requirements, such as three layers, but is not limited thereto.

The following describes the features of the present disclosure more specifically with reference to Experiments 1 to 7. Although the following embodiments are described, the materials, their amounts and ratios, processing details, processing procedures, etc., may be appropriately varied without exceeding the scope of the present disclosure. Accordingly, this disclosure should not be interpreted restrictively by the embodiments described below.

### Experiment 1: Manufacture of contact lenses with single hydrophilic coating

Silicone hydrogel lenses of Examples 1 to 7 were respectively hydrated and washed with pure water (distilled water or deionized water) at 70°C for 1 hour. 2 wt% polyacrylic acid (PAA, with a viscosity average molecular weight (Mv) of about 450,000 Da) and 5 wt% trehalose (D-(+)-trehalose dehydrate) were dissolved in the solvents in Table 1 below to form various solutions, which have a pH of 2.5. In Table 1, the weight percentage of ethanol is a weight percentage of the ethanol in the solvent. The lenses were respectively soaked in the solutions and were modified at the temperatures and time shown in Table 1 below to form hydrophilic coatings on the surfaces of the lenses. The lenses were placed in 9194 salt water, equilibrated at room temperature for 30 minutes, and then autoclaved in the salt water at 121 °C for 30 minutes to obtain silicone hydrogel lenses with a single hydrophilic coating. The 9194 salt water included 0.70 wt% sodium chloride (NaCl), 0.46 wt% boric acid (H₃BO₃), 0.05 wt% sodium tetraborate (Na₂B₄O₇·10H₂O), and water, and had a pH of about 7.2-7.4. The dynamic contact angles (DCA) of the silicone hydrogel lenses with the single hydrophilic coating were measured. The measurement steps were as follows. The lenses were placed under the fluid level of the 9194 salt water, and the advancing angle and receding angle were measured by the captive bubble method. The hysteresis angle (also known as contact angle hysteresis) was calculated by the difference between the advancing angle and receding angle. In the present disclosure, N represented the number of contact lenses used to calculate the average contact angle hysteresis.

**Table 1**

| Example | Solute of solution for forming hydrophilic coating | Solvent of solution for forming hydrophilic coating | Temperature (°C) | Time (minute) | Average contact angle hysteresis (N=5) (Unit: degree) |
|---|---|---|---|---|---|
| 1 | 2 wt% PAA+ 5wt % Trehalose | Pure water | 25 | 30 | 55.0 |
| 2 | 2 wt% PAA+ 5 wt % Trehalose | Ethanol (10 wt%)/ Pure water | 25 | 30 | 20.6 |
| 3 | 2 wt% PAA+ 5 wt % Trehalose | Ethanol (20 wt%)/ Pure water | 25 | 30 | 8.5 |
| 4 | 2 wt% PAA+ 5 wt % Trehalose | Pure water | 45 | 30 | 3.5 |
| 5 | 2 wt% PAA+ 5 wt % Trehalose | Ethanol (10 wt%)/ Pure water | 45 | 30 | 2.1 |
| 6 | 2 wt% PAA+ 5 wt % Trehalose | Ethanol (20 wt%)/ Pure water | 45 | 30 | 3.1 |
| 7 | 2 wt% PAA+ 5 wt % Trehalose | Pure water | 75 | 45 | 3.3 |

As can be seen from Examples 1 to 3, the addition of the ethanol to the solutions resulted in the formation of hydrophilic coatings with good hydrophilicity on the surfaces of the lenses soaked in the solutions at room temperature. The addition of the alcohol to the solutions could enhance the hydrophilicity of the hydrophilic coatings. In addition, as can be seen from Examples 2 to 7, the modified contact lenses with good hydrophilicity and wetness could be produced by the manufacturing method of the present disclosure, and had contact angle hysteresis as low as 2.1°.

### Experiment 2: Manufacture of contact lenses with hydrophilic coating

Silicone hydrogel lenses of Examples 8 to 14 were respectively hydrated and washed with pure water (distilled water or deionized water) at 70°C for 1 hour. 0.5 wt% polyacrylic acid (PAA, with a weight average molecular weight (Mw) of about 450,000 Da) aqueous solutions were prepared for the formation of the first hydrophilic coatings, and the pH of each aqueous solution was adjusted with hydrochloric acid (HCl) or formic acid (FA) as shown in Table 2 below. The lenses were respectively soaked in the solutions and were modified at the temperatures and pH shown in Table 2 below to form first hydrophilic coatings on the surfaces of the lenses, in which the modification time are 1 hour. The lenses with the first hydrophilic coating were soaked and washed in pure water (distilled water or deionized water) for 5 minutes at room temperature. The silicone hydrogel lenses of Examples 9 to 14 were further respectively soaked in aqueous solutions for forming a second hydrophilic coating. The aqueous solutions included 0.5 wt% polyvinylpyrrolidone (PVP, with a weight average molecular weight (Mw) of about 360,000 Da), and the pH of the aqueous solutions were adjusted with hydrochloric acid (HCl) or formic acid (FA). The lenses were modified at the temperatures and pH shown in Table 2 below for 1 hour to form the second hydrophilic coating on each first hydrophilic coating. The lenses were placed in the 9194 salt water, equilibrated at room temperature for 30 minutes, and then autoclaved in the salt water at 121 °C for 30 minutes to obtain the silicone hydrogel lenses with the hydrophilic coatings. The dynamic contact angles (DCA) of the silicone hydrogel lenses with the hydrophilic coatings were measured, and the contact angle hysteresis were calculated.

**Table 2**

| Example | Solute for forming first hydrophilic coating | pH | Temperature (°C) | Solute for forming second hydrophilic coating | pH | Temperature (°C) | Average contact angle hysteresis (N=6) (Unit: degree) |
|---|---|---|---|---|---|---|---|
| 8 | 0.5% PAA+ 0.6mL HCl | 1.5 | 70 | N/A | N/A | N/A | 1.9 |
| 9 | 0.5% PAA+ 0.6mL HCl | 1.5 | 70 | 0.5% PVP+ 0.8mL HCl | 1.5 | 70 | 2.5 |
| 10 | 0.5% PAA+ 0.3mL HCl | 2.0 | 40 | 0.5% PVP+ 0.3mL HCl | 2.0 | 40 | 6.0 |
| 11 | 0.5% PAA+ 0.3mL HCl | 2.0 | 70 | 0.5% PVP+ 0.3mL HCl | 2.0 | 70 | 1.3 |
| 12 | 0.5% PAA+ 0.5mL FA | 2.5 | 40 | 0.5% PVP+ 0.5mL FA | 2.5 | 40 | 4.0 |
| 13 | 0.5% PAA+ 3mL FA | 2.0 | 40 | 0.5% PVP+ 3mL FA | 2.0 | 40 | 3.9 |
| 14 | 0.5% PAA+ 3mL FA | 2.0 | 70 | 0.5% PVP+ 3mL FA | 2.0 | 70 | 2.6 |

As can be seen from Table 2, the modified contact lenses with good hydrophilicity and wetness could be produced by the manufacturing method of the present disclosure, and had contact angle hysteresis as low as 1.3°.

### Experiment 3: Manufacture of contact lenses with hydrophilic coating

Silicone hydrogel lenses of Examples 15 to 19 were respectively hydrated and washed with pure water (distilled water or deionized water) at 70°C for 1 hour. The lenses were respectively soaked in 1 wt% polyacrylic acid (PAA, with a weight average molecular weight (Mw) of about 3,000,000 Da) aqueous solutions. The pH of each aqueous solution was shown in Table 3 below. The lenses were modified at a temperature of 70°C for 1 hour to form first hydrophilic coatings on the surfaces of the lenses. The lenses with the first hydrophilic coating were soaked and washed in pure water (distilled water or deionized water) for 5 minutes at room temperature. The silicone hydrogel lenses of Examples 16 to 18 were further respectively soaked in aqueous solutions for forming a second hydrophilic coating. The aqueous solution included polyvinylpyrrolidone (PVP, with a weight average molecular weight (Mw) of about 360,000 Da), trehalose, or a combination thereof. The lenses were modified at the temperatures and pH shown in Table 3 below for 1 hour to form the second hydrophilic coating on each first hydrophilic coating. The lenses were placed in the 9194 salt water, equilibrated at room temperature for 30 minutes, and then autoclaved in the salt water at 121 °C for 30 minutes to obtain the silicone hydrogel lenses with the hydrophilic coatings. The dynamic contact angles (DCA) of the silicone hydrogel lenses with the hydrophilic coatings were measured, and the contact angle hysteresis were calculated.

**Table 3**

| Example | Solution for forming first hydrophilic coating | pH | Temperature (°C) | Solution for forming second hydrophilic coating | pH | Temperature (°C) | Average contact angle hysteresis (N=6) (Unit: degree) |
|---|---|---|---|---|---|---|---|
| 15 | 1% PAA (3000K) | 2.7 | 70 | N/A | N/A | N/A | 1.2 |
| 16 | 1% PAA (3000K) | 2.7 | 70 | 2% PVP (360K) | 5.0 | 70 | 1.3 |
| 17 | 1% PAA (3000K) | 2.7 | 70 | 2% PVP (360K)+ 2% Trehalose | 5.2 | 70 | 2.4 |
| 18 | 1% PAA (3000K) | 2.7 | 70 | 2% Trehalose | 6.9 | 70 | 3.1 |
| 19 | 1% PAA (3000K)+ 2% Trehalose | 2.6 | 70 | N/A | N/A | N/A | 1.6 |

As can be seen from Table 3, the modified contact lenses with good hydrophilicity and wetness could be produced by the manufacturing method of the present disclosure, and had contact angle hysteresis as low as 1.2°.

### Experiment 4: Manufacture of contact lenses with hydrophilic coating

Silicone hydrogel lenses of Examples 20 to 27 were respectively hydrated and washed with pure water (distilled water or deionized water) at 70°C for 1 hour. The lenses were respectively soaked in polyacrylic acid (PAA, with a weight average molecular weight (Mw) of about 450,000Da) aqueous solutions. The pH and temperature of each aqueous solution were shown in Table 4 below. The lenses were modified for 1 hour to form first hydrophilic coatings on the surfaces of the lenses. The lenses with the first hydrophilic coating were soaked and washed in pure water (distilled water or deionized water) for 5 minutes at room temperature. The silicone hydrogel lenses of Examples 21 and 25 to 27 were further respectively soaked in aqueous solutions for forming a second hydrophilic coating. The aqueous solution included polyvinylpyrrolidone (PVP, with a weight average molecular weight (Mw) of about 360,000 Da) or trehalose. The lenses were modified at the temperatures and pH shown in Table 4 below for 1 hour to form the second hydrophilic coating on each first hydrophilic coating. The lenses were placed in the 9194 salt water, equilibrated at room temperature for 30 minutes, and then autoclaved in the salt water at 121 °C for 30 minutes to obtain the silicone hydrogel lenses with the hydrophilic coatings. The dynamic contact angles (DCA) of the silicone hydrogel lenses with the hydrophilic coatings were measured, and the contact angle hysteresis were calculated.

**Table 4**

| Example | Solution for forming first hydrophilic coating | pH | Temperature (°C) | Solution for forming second hydrophilic coating | pH | Temperature (°C) | Average contact angle hysteresis (N=6) (Unit: degree) |
|---|---|---|---|---|---|---|---|
| 20 | 0.5% PAA | 2.8 | 70 | N/A | N/A | N/A | 2.5 |
| 21 | 0.5% PAA | 2.8 | 70 | 0.5% PVP (360K) | 5.0 | 70 | 2.3 |
| 22 | 1% PAA | 2.7 | 70 | N/A | N/A | N/A | 5.4 |
| 23 | 2% PAA | 2.5 | 70 | N/A | N/A | N/A | 5.7 |
| 24 | 2% PAA+ 5% Trehalose | 2.5 | 70 | N/A | N/A | N/A | 3.0 |
| 25 | 2% PAA | 2.5 | 70 | 2% Trehalose | 6.9 | 70 | 3.1 |
| 26 | 2% PAA | 2.5 | 40 | 2% PVP (360K) | 5.0 | 40 | 8.3 |
| 27 | 2% PAA | 2.5 | 70 | 2% PVP (360K) | 5.0 | 70 | 1.4 |

As can be seen from Table 4, the modified contact lenses with good hydrophilicity and wetness could be produced by the manufacturing method of the present disclosure, and had contact angle hysteresis as low as 1.4°.

### Experiment 5: Contact lens stability test

A reproducibility experiment was conducted with the experimental conditions of Example 25, and the experimental result was shown in Example 28 of Table 5 below. Reproducibility experiments were conducted with the experimental conditions of Example 27, and the experimental result was shown in Examples 29 to 30 in Table 5 below. After different number of times of sterilization in 9194 salt water for the lenses of Examples 25 and 27 to 30 and commercially available products "DAILIES TOTAL1" and "ACUVUE oasys," the average contact angle hysteresis of the contact lenses were measured.

**Table 5**

| Example | Average contact angle hysteresis after once sterilization (Unit: degree) | Average contact angle hysteresis after twice sterilization (Unit: degree) | Average contact angle hysteresis after thrice sterilization (Unit: degree) |
|---|---|---|---|
| 25 | 3.1 (N=6) | 3.9 (N=4) | 3.6 (N=2) |
| 28 | 1.1 (N=6) | 2.4 (N=6) | 2.0 (N=6) |
| 27 | 1.4 (N=6) | 2.9 (N=4) | 3.3 (N=2) |
| 29 | 2.3 (N=6) | 2.9 (N=4) | 0.3 (N=2) |
| 30 | 1.5 (N=6) | 2.8 (N=5) | 2.9 (N=5) |
| DAILIES TOTAL1 | 4.9 (N=5) | 12.1 (N=5) | 11.1 (N=5) |
| ACUVUE oasys | 6.4 (N=5) | 10.5 (N=5) | 11.4 (N=5) |

As can be seen from Table 5, Examples 25 and 27 to 30 of the present disclosure still had fairly small contact angle hysteresis after multiple sterilization, which meant that the hydrophilic coatings of the lenses still had good hydrophilicity and excellent stability and adhesion. The contact lenses of Examples 25 and 27 to 30 each had two hydrophilic coatings, in which the first hydrophilic coating was adhered well to the lens, and the second hydrophilic coating was adhered well to the first hydrophilic coating. On the other hand, the hysteresis angles of "DAILIES TOTAL1" and "ACUVUE oasys" increased significantly after multiple sterilization, which meant that the multiple sterilization had a negative effect on the hydrophilicity of both.

### Experiment 6: Manufacture of contact lenses with hydrophilic coating

Silicone hydrogel lenses of Examples 27, 31, and 32 were respectively hydrated and washed with pure water (distilled water or deionized water) at 70°C for 1 hour. The lenses were respectively soaked in 2 wt% polyacrylic acid (PAA, with a weight average molecular weight (Mw) of about 450,000Da) aqueous solutions. The pH of each aqueous solution was 2.5. The lenses were modified at 70°C for the time period shown in Table 6 below to form first hydrophilic coatings on the lens surfaces. The lenses with the first hydrophilic coatings were soaked and washed in pure water (distilled water or deionized water) for 5 minutes at room temperature. The silicone hydrogel lenses of Examples 27, 31, and 32 were further respectively soaked in 2 wt% polyvinylpyrrolidone (PVP, with a weight average molecular weight (Mw) of about 360,000 Da) aqueous solutions. The lenses were modified at 70°C for the time period shown in Table 6 below to form a second hydrophilic coating on each lens surface. The lenses were placed in the 9194 salt water, equilibrated at room temperature for 30 minutes, and then autoclaved in the salt water at 121 °C for 30 minutes to obtain the silicone hydrogel lenses with the hydrophilic coatings. The dynamic contact angles (DCA) of the silicone hydrogel lenses with the hydrophilic coatings were measured, and the contact angle hysteresis were calculated.

**Table 6**

| Example | Time for forming first hydrophilic coating (minute) | Time for forming second hydrophilic coating (minute) | Average contact angle hysteresis (Unit: degree) |
|---|---|---|---|
| 27 | 60 | 60 | 1.4 (N=6) |
| 31 | 30 | 30 | 2.0 (N=9) |
| 32 | 15 | 15 | 2.4 (N=12) |

As can be seen from Table 6, the modified contact lenses with good hydrophilicity and wetness could be produced by the manufacturing method of the present disclosure in a short period of time, and had contact angle hysteresis as low as 1.4°. The manufacturing method of the present disclosure can improve the production efficiencies of contact lenses.

### Experiment 7: Manufacture of contact lenses with hydrophilic coating

Silicone hydrogel lenses of Examples 33 to 43 were respectively hydrated and washed with pure water (distilled water or deionized water) at 70°C for 1 hour. The lenses were respectively soaked in 2 wt% polyacrylic acid (PAA, with a weight average molecular weight (Mw) of about 1,000,000 Da) aqueous solutions. The pH of each aqueous solution was 3. The lenses were modified at 70°C for 1 hour to form first hydrophilic coatings on the lens surfaces. The lenses with the first hydrophilic coating were soaked and washed in pure water (distilled water or deionized water) for 5 minutes at room temperature. The silicone hydrogel lenses of Examples 33 to 43 were further respectively soaked in aqueous solutions for forming a second hydrophilic coating. The lenses were modified at the temperatures shown in Table 7 below for 1 hour to form the second hydrophilic coating on each first hydrophilic coating. The aqueous solution for forming the second hydrophilic coating may have a pH of 1 to 14. The second hydrophilic coating includes hyaluronic acid (HA), poly(2-methacryloyloxyethyl phosphorylcholine) (PMPC), methylcellulose (MC), hydroxypropyl methylcellulose (HPMC), carboxymethyl cellulose (CMC), poloxamine (e.g., Tetronic^{®} 1107), poloxamer (e.g., Pluronic^{®} F-127), polyvinylpyrrolidone (PVP) (e.g., PVP-K90), polyglutamic acid (γ-PGA), vitamin C, or alginic acid. The above materials can adhere to the first hydrophilic coatings due to their physical properties, thereby forming the second hydrophilic coatings with good surface properties, such as an average contact angle hysteresis of less than 10°. Therefore, there is no need for additional adjustment of the pH of the aqueous solution to fall within a specific value. The lenses were placed in the 9194 salt water, equilibrated at room temperature for 30 minutes, and then autoclaved in the salt water at 121 °C for 30 minutes to obtain the silicone hydrogel lenses with the hydrophilic coatings. The dynamic contact angles (DCA) of the silicone hydrogel lenses with the hydrophilic coatings were measured, and the contact angle hysteresis were calculated.

**Table 7**

| Example | Solution for forming first hydrophilic coating | pH | Temperature (°C) | Solution for forming second hydrophilic coating | Temperature (°C) | Average contact angle hysteresis (N=6) (Unit: degree) |
|---|---|---|---|---|---|---|
| 33 | 2% PAA (1000K) | 3.0 | 70 | 2% HA | 70 | 3.6 |
| 34 | 2% PAA (1000K) | 3.0 | 70 | 2% PMPC | 70 | 6.6 |
| 35 | 2% PAA (1000K) | 3.0 | 70 | 2% MC | 70 | 3.2 |
| 36 | 2% PAA (1000K) | 3.0 | 70 | 2% HPMC | 70 | 2.7 |
| 37 | 2% PAA (1000K) | 3.0 | 70 | 2% CMC | 70 | 2.7 |
| 38 | 2% PAA (1000K) | 3.0 | 70 | 2% Tetronic^{®} 1107 | 70 | 5.5 |
| 39 | 2% PAA (1000K) | 3.0 | 70 | 2% Pluronic^{®} F-127 | 70 | 3.4 |
| 40 | 2% PAA (1000K) | 3.0 | 70 | 2% PVP-K90 | 70 | 1.3 |
| 41 | 2% PAA (1000K) | 3.0 | 70 | 0.2% γ-PGA | 70 | 2.5 |
| 42 | 2% PAA (1000K) | 3.0 | 70 | 5% Vitamin C | 70 | 2.2 |
| 43 | 2% PAA (1000K) | 3.0 | 70 | 0.2% Trehalose | 70 | 4.6 |

As can be seen from Table 7, the modified contact lenses with good hydrophilicity and wetness could be produced by the manufacturing method of the present disclosure, and had contact angle hysteresis as low as 1.3°.

The present disclosure provides two types of contact lenses and manufacturing methods thereof. The manufacturing methods include forming one or more hydrophilic coatings on the surfaces of the contact lenses. The one or more hydrophilic coatings are attached to the lens surfaces by hydrogen bonding, ionic bonding, or a combination thereof. Since the hydrophilic coatings are "not" attached to the contact lenses by covalent bonding, the lens properties and the lens structure are not affected by the hydrophilic coatings. In other words, the manufacturing method of the present disclosure enables the lenses to maintain their original properties and enhances the hydrophilic and wetting properties by the hydrophilic coatings. Moreover, the present disclosure can form the hydrophilic coatings at room temperature or lower temperature or within a short period of time; therefore, the manufacturing process is simple and can improve the production efficiencies of the contact lenses. The contact lenses of the present disclosure have a small hysteresis angle, high hydrophilicity, and high stability. The hydrophilic coatings have good adhesion.

Although the present disclosure has been described in considerable detail with reference to certain embodiments thereof, other embodiments are possible. Therefore, the spirit and scope of the appended claims should not be limited to the description of the embodiments contained herein.

It will be apparent to those skilled in the art that various modifications and variations can be made to the structure of the present disclosure without departing from the scope or spirit of the disclosure. In view of the foregoing, it is intended that the present disclosure cover modifications and variations of this disclosure provided they fall within the scope of the following claims.

## Claims

1. A contact lens, **characterized by** comprising:
a lens; and
a hydrophilic coating attached to a surface of the lens by hydrogen bonding, ionic bonding, or a combination thereof, wherein the hydrophilic coating comprises polyacrylic acid and carbohydrate, and the carbohydrate comprises monosaccharide, disaccharide, or a combination thereof.

2. The contact lens of claim 1, **characterized in that** the carbohydrate comprises glyceraldehyde, dihydroxyacetone, erythrose, ribose, deoxyribose, arabinose, xylose, lyxose, idose, glucose, fructose, galactose, mannose, rhamnose, sedoheptulose, mannoheptulose, sucrose, trehalose, lactose, maltose, or combinations thereof.

3. The contact lens of claim 1, **characterized in that** a weight ratio of the polyacrylic acid to the carbohydrate is ranged from 1:0.01 to 1:10.

4. A contact lens, **characterized by** comprising:
a lens;
a first hydrophilic coating attached to a surface of the lens by hydrogen bonding, ionic bonding, or a combination thereof, wherein the first hydrophilic coating comprises polyacrylic acid; and
a second hydrophilic coating disposed on the first hydrophilic coating, wherein the first hydrophilic coating is disposed between the lens and the second hydrophilic coating, the second hydrophilic coating comprises polyvinylpyrrolidone, poloxamine, poloxamer, methylcellulose, hydroxypropyl methylcellulose, carboxymethyl cellulose, ascorbic acid, poly(2-methacryloyloxyethyl phosphorylcholine), hyaluronic acid, alginic acid, polyglutamic acid, carbohydrate, or combinations thereof, and the carbohydrate comprises monosaccharide, disaccharide, or a combination thereof.

5. The contact lens of claim 4, **characterized in that** the carbohydrate comprises glyceraldehyde, dihydroxyacetone, erythrose, ribose, deoxyribose, arabinose, xylose, lyxose, idose, glucose, fructose, galactose, mannose, rhamnose, sedoheptulose, mannoheptulose, sucrose, trehalose, lactose, maltose, or combinations thereof.

6. The contact lens of claim 4, **characterized in that** the second hydrophilic coating comprises the polyvinylpyrrolidone and the carbohydrate, and a weight ratio of the polyvinylpyrrolidone to the carbohydrate is ranged from 1:0.01 to 1:10.

7. The contact lens of any one of claims 4-6, **characterized in that** the lens is selected from the group consisting of a rigid gas permeable lens, a hydrogel lens, and a silicone hydrogel lens.

8. A manufacturing method of a contact lens, **characterized by** comprising:
soaking a lens in an acidic solution to form a hydrophilic coating on a surface of the lens, wherein the acidic solution comprises polyacrylic acid, carbohydrate, and a polar solvent, and the carbohydrate comprises monosaccharide, disaccharide, or a combination thereof.

9. The manufacturing method of claim 8, **characterized in that** soaking the lens in the acidic solution is performed at a temperature of 20 °C to 90 °C.

10. The manufacturing method of claim 8, **characterized in that** a weight percentage of the polyacrylic acid in the acidic solution is from 0.05% to 5%.

11. The manufacturing method of claim 8, **characterized in that** a weight percentage of the carbohydrate in the acidic solution is from 0.05% to 10%.

12. The manufacturing method of claim 8, **characterized in that** the carbohydrate comprises glyceraldehyde, dihydroxyacetone, erythrose, ribose, deoxyribose, arabinose, xylose, lyxose, idose, glucose, fructose, galactose, mannose, rhamnose, sedoheptulose, mannoheptulose, sucrose, trehalose, lactose, maltose, or combinations thereof.

13. The manufacturing method of claim 8, **characterized in that** the acidic solution has a pH of 1 to 6.9.

14. The manufacturing method of claim 8, **characterized in that** the polar solvent comprises water, alcohol, or a combination thereof.

15. The manufacturing method of claim 14, **characterized in that** the polar solvent comprises the water and the alcohol, and soaking the lens in the acidic solution is performed at a temperature of 20 °C to 90 °C.

16. A manufacturing method of a contact lens, **characterized by** comprising:
soaking a lens in an acidic solution to form a first hydrophilic coating on a surface of the lens, wherein the acidic solution comprises polyacrylic acid and a first polar solvent; and
soaking the lens having the first hydrophilic coating in a hydrophilic solution to form a second hydrophilic coating on the first hydrophilic coating, wherein the hydrophilic solution comprises polyvinylpyrrolidone, poloxamine, poloxamer, methylcellulose, hydroxypropyl methylcellulose, carboxymethyl cellulose, ascorbic acid, poly(2-methacryloyloxyethyl phosphorylcholine), hyaluronic acid, alginic acid, polyglutamic acid, carbohydrate, or combinations thereof, and a second polar solvent, and the carbohydrate comprises monosaccharide, disaccharide, or a combination thereof.

17. The manufacturing method of claim 16, **characterized in that** the hydrophilic solution comprises the polyvinylpyrrolidone, and a weight percentage of the polyvinylpyrrolidone is ranged from 0.05 % to 10 %.

18. The manufacturing method of claim 16, **characterized in that** the hydrophilic solution comprises the carbohydrate, and a weight percentage of the carbohydrate in the acidic solution is from 0.05% to 10%.

19. The manufacturing method of claim 16, **characterized in that** the hydrophilic solution has a pH of 1 to 14.

20. The manufacturing method of claim 16, **characterized in that** soaking the lens having the first hydrophilic coating in the hydrophilic solution is performed at a temperature of 20 °C to 90 °C.

21. The manufacturing method of claim 16, **characterized in that** the carbohydrate comprises glyceraldehyde, dihydroxyacetone, erythrose, ribose, deoxyribose, arabinose, xylose, lyxose, idose, glucose, fructose, galactose, mannose, rhamnose, sedoheptulose, mannoheptulose, sucrose, trehalose, lactose, maltose, or combinations thereof.
